# EUROPÄISCHE PATENTSCHRIFT

(11) **EP 0 440 977 B1**
(45) Veröffentlichungstag und Bekanntmachung des Hinweises auf die Patenterteilung: **16.02.1994**
(21) Anmeldenummer: 90125357.5
(22) Anmeldetag: 22.12.1990
(51) Int. Cl.: A01D 34/00, F16H 61/00, F16H 9/14

(54) **Kraftfahrzeug, insbesondere Kleinschlepper**
Motor vehicle, particularly tractorette
Véhicule à moteur, particulièrement mini-tracteur

(30) Priorität: 26.01.1990 US 471294
(43) Veröffentlichungstag der Anmeldung: 14.08.1991
(60) Teilanmeldung: 93111084.5
(73) Patentinhaber: DEERE & COMPANY, Moline, Illinois 61265 (US)
(72) Erfinder: Hoch, John Joseph, Columbus, Wisconsin 53925 (US); Hardzinski, James Edward, Horicon, Wisconsin 53032 (US)
(74) Vertreter: Feldmann, Bernhard

(56) Entgegenhaltungen:
- EP-A- 0 027 513
- GB-A- 2 027 824
- GB-A- 2 180 018
- US-A- 2 989 876
- US-A- 3 583 535
- US-A- 4 176 560
- US-A- 4 698 048

## Beschreibung

Die Erfindung bezieht sich auf ein Kraftfahrzeug, insbesondere Kleinschlepper, mit einem mindestens ein Laufrad antreibenden Endgetriebe, dessen Drehrichtung bei einer Verstellung eines ersten an Steuerteile angeschlossenen Bedienungselements (Schalthebel 24) in eine Stellung für Vorwärtsfahrt und eine Stellung für Rückwärtsfahrt bzw. umgekehrt umkehrbar und dessen Ausgangsdrehzahl bei einer Verstellung eines zweiten an Beschleunigungsteile angeschlossenen Bedienungselements (Pedal 20) von Null auf eine vorgegebene Maximaldrehzahl über eine verschwenkbare Zugmittelscheibe eines vorgeschallteten Zugmittelgetriebes variierbar ist, wobei, wenn sich das erste Bedienungselement (Schalthebel 24) oder seine Steuerteile in einer Stellung für Vorwärtsfahrt oder Rückwärtsfahrt befinden, das zweite Bedienungselement (Pedal 20) aus seiner Ruhestellung, in der das Endgetriebe nicht angetrieben ist, in einer ersten Richtung verstellbar ist, in der das Endgetriebe antreibbar ist, und in einer zweiten Richtung, die der ersten Richtung entgegengesetzt ist, um das Endgetriebe, das sich in seiner Stellung für Vorwärtsfahrt oder Rückwärtsfahrt befindet, aus seiner angetriebenen Stellung in seine nicht angetriebene Stellung zu bringen.

Derartige zugmittelgetriebene Kraftfahrzeuge werden in der Regel zur Pflege von Parkanlagen, Golfplätzen, zur Reinigung von Gehwegen und insbesondere in privaten Gartenanlagen eingesetzt. Je nach ihrem Einsatz können sie mit den verschiedensten Arbeitsgeräten, wie Rasenmäher, Kehrbesen, Schneegebläsen usw., ausgerüstet werden. Nur in den seltensten Fällen kann unterstellt werden, daß die diese Kraftfahrzeuge fahrenden und die angeschlossenen Arbeitsgeräte bedienenden Personen ausreichend für diese Tätigkeit geschult sind, was insbesondere bei Familienmitgliedern beim Einsatz im häuslichen Garten der Fall ist. Bei nicht sachgemäßer Bedienung können Gefahren für Gerät und Mensch entstehen.

Bei dem Kraftfahrzeug, von dem die Erfindung ausgeht (US-A-4 176 560), ist ein Handschalthebel zum Schalten des Endgetriebes in eine Stellung für Vorwärts- oder Rückwärtsfahrt vorgesehen. Das Endgetriebe weist keine Neutralstellung auf. Da der Antrieb des Endgetriebes über ein stufenlos einstellbares Zugmittelgetriebe erfolgt, sind Gänge nicht erforderlich, und die Drehzahländerung bei der Vorwärts- oder Rückwärtsfahrt, d. h. die Fahrgeschwindigkeitsänderung, wird durch Verändern der wirksamen Durchmesser einer doppelten Zugmittelscheibe durchgeführt. Im vorliegenden Fall erfolgt dies durch Verschwenken dieser Zugmittelscheibe bei Betätigung eines am Bedienungsstand vorgesehenen Pedals. Handschalthebel und Pedal können bei dieser Ausführung gleichzeitig betätigt werden, so daß dieses Kraftfahrzeug beispielsweise durch ungeübtes oder unaufmerksames Bedienungspersonal bei seiner maximalen Vorwärtsgeschwindigkeit in den Rückwärtsgang geschaltet werden kann, was natürlich zu Beschädigungen am Gerät führt, aber auch die Bedienungsperson in Gefahr bringt.

Um derartige Gefahren zumindest teilweise auszuschalten, sind andere Schalt- und Bedienungsgestänge bekannt geworden. So offenbart das Dokument US-A-4 771 856 einen aus seiner Stellung für Vorwärtsfahrt über eine Neutralstellung in seine Position für Rückwärtsfahrt verstellbaren Handschalthebel, mit dem auch die Fahrgeschwindigkeit eingestellt werden kann. Zusätzlich ist noch ein mit dem Beschleunigungsgestänge verknüpftes Kupplungspedal vorgesehen, bei dessen anfänglicher Betätigung die Fahrgeschwindigkeit verringert wird und bei dessen vollständigem Niedertreten das Fahrzeug zum Stillstand kommt. Damit kann dieses Kraftfahrzeug bei Betätigung des Handschalthebels oder bei Betätigung des Kupplungspedals zum Stillstand gebracht oder verlangsamt werden. Sobald aber das Kupplungspedal wieder losgelassen wird, wird die durch den Handschalthebel eingestellte Fahrgeschwindigkeit und Fahrtrichtung wieder aufgenommen. Selbstverständlich ist auch eine Bremse vorhanden. Dieses Schalt- und Bedienungsgestänge schließt Bedienungsfehler aus, benötigt allerdings geschulte Bedienungspersonen.

Es ist auch nicht mehr neu (US-A-3 777 585), die maximale Fahrgeschwindigkeit zu begrenzen. Hierzu ist in diesem Dokument ein Fingerelement in eine gewünschte Position verstellbar.

Aus der US-A-4 759 417 ist ein weiteres Sicherheitselement bekannt, da hier je ein Pedal für Vorwärts- und Rückwärtsfahrt in der Ruhestellung über ein Hakenelement arretiert werden kann, wenn sich eine Parkbremse in ihrem eingerückten Zustand befindet.

Die mit der Erfindung zu lösende Aufgabe wird darin gesehen, das Schalt- und Bedienungsgestänge für zugmittelgetriebene Kraftfahrzeuge, insbesondere Kleinschlepper der eingangs genannten Art, einfach auszubilden, so daß Bedienungsfehler zumindest weitgehend ausgeschlossen sind und die nötige Sicherheit gegeben ist.

Diese Aufgabe ist nach der Erfindung dadurch gelöst worden, daß die Steuerteile mit den Beschleunigungsteilen derart gekuppelt sind, daß die Steuerteile aus einer ihrer Stellungen für Vorwärtsfahrt oder Rückwärtsfahrt nur verstellbar sind, wenn sich die Beschleunigungsteile in ihrer Stellung für die Ausgangsdrehzahl Null befinden. Auf diese Weise kann die Fahrtrichtung nicht geändert werden, wenn das Fahrzeug angetrieben wird. Die Ausgangsdrehzahl des Zugmittelgetriebes muß hierzu zunächst auf Null reduziert werden, beispielsweise in einfacher Weise dadurch, daß die Zugmittelscheibe derart verschwenkt wird, daß das Zugmittel nicht mehr gespannt ist und damit keine Kraft übertragen kann. Das Endgetriebe braucht dann auch keine Neutralstellung aufzuweisen. Bei angetriebenem und damit fortbewegtem Kraftfahrzeug können zwar die Steuerteile unter Umständen geringfügig verstellt werden, doch ist deren Stellweg dann nicht groß genug, um die Fahrtrichtung zu ändern.

Ein zusätzliches Sicherheitsmerkmal wird nach einem weiteren Vorschlag der Erfindung dadurch erreicht, daß die Beschleunigungsteile mit den Steuerteilen derart gekuppelt sind, daß bei sich in ihrer Stellung für Rückwärtsfahrt befindlichen Steuerteilen der Verstellbereich der Beschleunigungsteile geringer ist als bei sich in ihrer Stellung für Vorwärtsfahrt befindlichen Steuerteilen. Damit ist die Fahrgeschwindigkeit bei Rückwärtsfahrt geringer als bei Vorwärtsfahrt.

Erfindungsgemäß kann ferner vorgesehen werden, daß die Beschleunigungsteile aus ihrer Stellung für die Ausgangsdrehzahl Null gegen die Wirkung mindestens einer Feder verstellbar sind. In üblicher Weise werden die Beschleunigungsteile über ein Betätigungsglied verstellt, bei dessen Loslassen das Fahrzeug zum Stillstand kommt. Beim Absteigen der Bedienungsperson vom Fahrzeug kann sich dieses durch diese an sich bekannte Maßnahme nicht selbständig in Bewegung setzen.

Das Fahrzeug kann nach der Erfindung nur angetrieben werden, wenn die Beschleunigungsteile aus ihrer Stellung für die Ausgangsdrehzahl Null verstellt werden, was bei abgestelltem Fahrzeug aus Sicherheitsgründen bei der Vorrichtung nach der Erfindung verhindert werden kann, wenn die Beschleunigungsteile in ihrer Stellung für die Ausgangsdrehzahl Null und bei einer eingelegten Parkbremse gegen eine Verstellung blockiert sind.

Eine einfache Betätigungsmöglichkeit zum Verändern der Fahrgeschwindigkeit ergibt sich ferner dadurch, daß die Beschleunigungsteile bei Betätigung eines ersten Pedals aus ihrer Stellung für die Ausgangsdrehzahl Null verstellbar sind.

Weniger Ermüdungserscheinungen treten nach einem weiteren Merkmal der Erfindung dadurch auf, daß das erste Pedal zwei in einem Winkel miteinander verbundene Pedalflächen aufweist. Auf diese Weise kann der Fuß der Bedienungsperson auf den beiden Pedalflächen leicht abrollen, wobei die Ferse immer auf dem Boden abgestützt bleiben kann. Je nachdem, wie weit das erste Pedal durchgetreten ist, befindet sich der Fußballen auf der oberen oder unteren Pedalfläche.

Nach der Erfindung wird zusätzlich vorgeschlagen, daß die Steuerteile eine erste das Endgetriebe in eine Stellung für Vorwärtsfahrt und in eine Stellung für Rückwärtsfahrt schaltende Schaltstange aufweisen, die anderenends an dem einen Ende eines schwenkbar gelagerten Schwenkarms angelenkt ist, dessen anderes Ende an einer zweiten Schaltstange schwenkbar angreift, die mit ihrem anderen Ende an einem manuell betätigbaren Schalthebel angreift. Damit braucht nur die Schaltung von vorwärts auf rückwärts oder umgekehrt von Hand ausgeführt zu werden, so daß sich zusammen mit der über den Fuß erfolgenden Geschwindigkeitsänderung eine Bedienung ergibt, die einem vom Autofahren, insbesondere mit automatischen Getrieben, her bekannt ist. Ungeübten Bedienungspersonen fällt eine solche Bedienung leicht, da sie ihnen vom Autofahren her geläufig ist.

Die äußerst einfach ausgebildeten, von Hand betätigbaren Beschleunigungsteile sind damit auch mit einem ortsfest gelagerten Schwenkarm versehen, der unterschiedliche Stellungen bei Vorwärts- und bei Rückwärtsfahrt einnimmt. Doch ist dieser Schwenkarm nach einem zusätzlichen Merkmal der Erfindung derart anzuordnen, daß er bei sich in ihren Stellungen für Vorwärts- oder Rückwärtsfahrt befindlichen Steuerteilen und aus ihrer Stellung für die Ausgangsdrehzahl Null verstellten Beschleunigungsteilen gegen das eine Ende einer schwenkbar gelagerten Sperrklinke anliegt, die über die Beschleunigungsteile verschwenkbar ist. Auf diese Weise sind die Steuerteile in einfacher Art mit den Beschleunigungsteilen verknüpft, und eine Änderung der Fahrtrichtung kann nur erfolgen, wenn das Fahrzeug nicht mehr angetrieben ist, d. h. wenn das Zugmittelgetriebe keine Kraft mehr überträgt. Schwenkarm und Sperrklinke bewegen sich auf sich teilweise überlappenden Kreisbögen. In Bereichen der Überlappung ist eine Fahrtrichtungsänderung ausgeschlossen.

Besonders einfach läßt sich eine geringere Rückwärtsgeschwindigkeit dann erreichen, wenn der Schwenkarm bei sich in ihrer Stellung für Rückwärtsfahrt befindlichen Steuerteilen den Verstellbereich der Beschleunigungsteile aus ihrer Stellung für die Ausgangsdrehzahl Null begrenzt. Das erste Pedal läßt sich dadurch bei Rückwärtsfahrt nicht so weit durchtreten wie bei Vorwärtsfahrt. Sollte die Bedienungsperson dies dennoch mit einem ungewöhnlichen Kraftaufwand versuchen, so wird das weitere Durchtreten dadurch vermieden, daß der Schwenkarm bei sich in ihrer Stellung für Rückwärtsfahrt befindlichen Steuerteilen gegen einen Anschlag anliegt.

Im einzelnen kann die Sperrklinke mit ihrem dem Schwenkarm abgelegenen Ende gegebenenfalls über einen längenveränderlichen Teil mit einem die Zugmittelscheibe verschwenkenden Arm verbunden sein, wobei die Zugmittelscheibe in der Stellung der Beschleunigungsteile für die Ausgangsdrehzahl Null ein das Endgetriebe normalerweise antreibendes Zugmittel ungespannt läßt. Damit wird die Sperrklinke verschwenkt, wenn auch die Zugmittelscheibe verschwenkt wird. In herkömmlicher Weise ist die Zugmittelscheibe als Spannrolle ausgebildet und einer doppelseitigen, in ihren wirksamen Durchmessern verstellbaren Zugmittelscheibe zugeordnet, so daß sie je nach ihrer Schwenkstellung das Zugmittel nicht spannt, so daß das Zugmittel keine Kraft auf die doppelseitige Zugmittelscheibe übertragen kann, diese nicht umläuft und die Ausgangsdrehzahl des Endgetriebes Null ist. Wird dagegen die Spannrolle durch Betätigung des ersten Pedals derart verschwenkt, daß das Zugmittel gespannt wird, so wird auch die doppelseitige Zugmittelscheibe in Drehung versetzt und das Endgetriebe angetrieben. Bei einem weiteren Heruntertreten des ersten Pedals wird die Spannrolle weiter verschwenkt und der wirksame Durchmesser der doppelseitigen Zugmittelscheibe verändert, was in einer Beschleunigung des Fahrzeuges resultiert.

Ein Festsetzen des ersten Pedals kann in einfacher Art dadurch erreicht werden, daß das erste Pedal mit einer drehbar gelagerten Welle fest verbunden ist, die einen Armteil aufweist, und daß eine Bremsvorrichtung mit einem zweiten Pedal vorgesehen ist, das bei eingelegter Parkbremse in seiner Bremsstellung gehalten wird und bei Betätigung einen mit ihm verbundenen Nocken verschwenkt, der gegen eine Stoppstange derart anliegt, daß sie sich bei sich in ihrer Stellung für die Ausgangsdrehzahl Null befindlichen Beschleunigungsteilen und bei sich in der Bremsstellung befindlichem zweiten Pedal unter der Wirkung einer Feder um den Armteil legt.

In der Zeichnung ist ein nachfolgend näher erläutertes Ausführungsbeispiel der Erfindung dargestellt. Es zeigt:
- Fig. 1: ein Kraftfahrzeug in Form eines selbstfahrenden Rasenmähers,
- Fig. 2: eine Feststelleinrichtung für eine Fußbremse oder eine Parkbremse im gelösten Zustand,
- Fig. 3: eine ähnliche Darstellung wie in Fig. 2, die Parkbremse jedoch in ihrem eingerückten Zustand darstellend,
- Fig. 4: das Endgetriebe des Rasenmähers in einer Stellung für Vorwärtsfahrt bei unbetätigten Pedalen für die Fahrzeugbeschleunigung und Fahrzeugbremse,
- Fig. 5: eine ähnliche Darstellung wie in Fig. 4, wobei eine Spannrolle jedoch eine Stellung einnimmt, als wäre das Pedal für die Fahrzeugbeschleunigung zumindest teilweise heruntergetreten,
- Fig. 6: das Endgetriebe des Rasenmähers in einer Stellung für Rückwärtsfahrt bei unbetätigtem Pedal für die Fahrzeugbremse und durchgetretenem Pedal für die Fahrzeugbeschleunigung,
- Fig. 7: die Pedale für die Fahrzeugbeschleunigung und Fahrzeugbremsung im unbetätigten Zustand und in Seitenansicht,
- Fig. 8: die Pedale nach Fig. 7 bei eingelegter Parkbremse,
- Fig. 9: das Pedal für die Fahrzeugbeschleunigung in ausgezogenen Linien und im unbetätigten Zustand und in unterbrochenen Linien im durchgetretenen Zustand und
- Fig. 10: eine Arretierungsvorrichtung für das Pedal für die Fahrzeugbeschleunigung in Draufsicht.

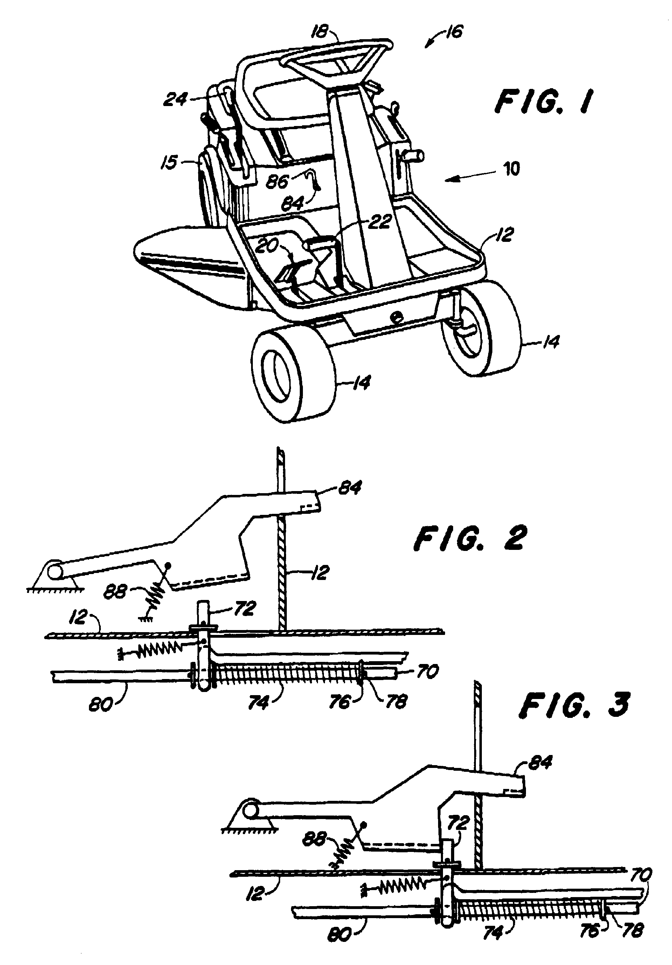

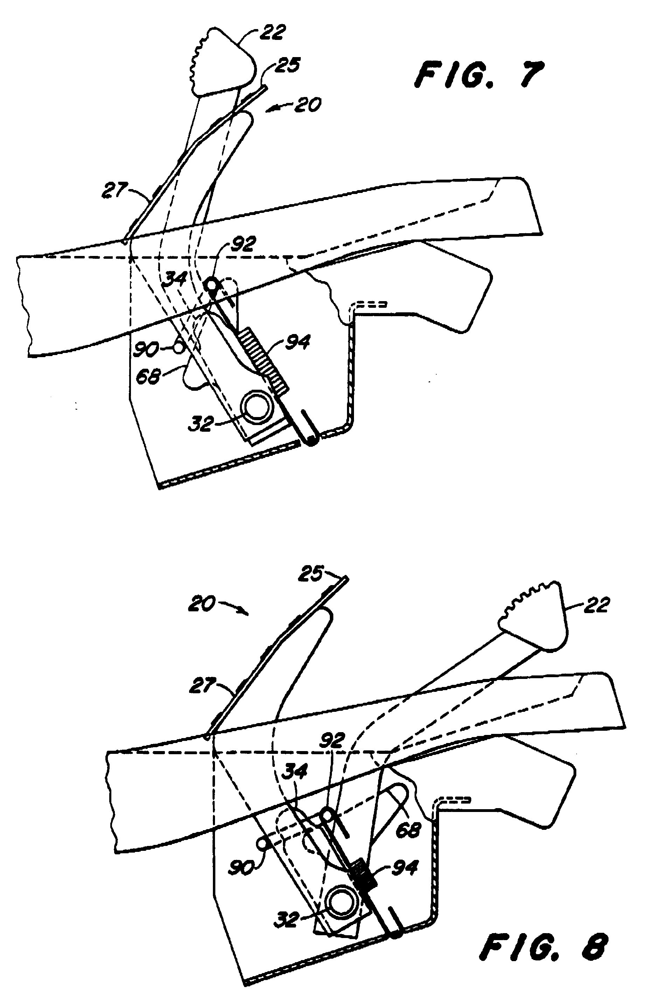

In Fig. 1 der Zeichnung ist ein Kraftfahrzeug 10 in Form eines selbstfahrenden Rasenmähers dargestellt. Es ist mit einem Rahmen 12, Laufrädern 14 und 15 und einem Bedienungsstand 16 versehen. Letzterer weist ein Lenkrad 18, ein Pedal 20 für die Fahrzeugbeschleunigung, ein Pedal 22 für die Fahrzeugbremsung und einen von Hand betätigbaren Schalthebel 24 für die Fahrtrichtungsumkehr auf. Aus den Fig. 7, 8 und 9 ist ferner noch zu entnehmen, daß das Pedal 20 eine obere Pedalfläche 25 hat, die in einem Winkel zu einer rückwärtigen Pedalfläche 27 angeordnet ist. Der Rahmen 12 nimmt eine nicht dargestellte Kraftquelle, wie einen Verbrennungs- oder Elektromotor, auf, und die Kraft wird von dort zu den antreibbaren rückwärtigen Laufrädern 15 über ein Zugmittelgetriebe, wie es in dem Dokument US-A-4 771 856 beschrieben ist und auf das dieserhalb ausdrücklich Bezug genommen wird, und ein Endgetriebe 44 oder dergleichen übertragen.

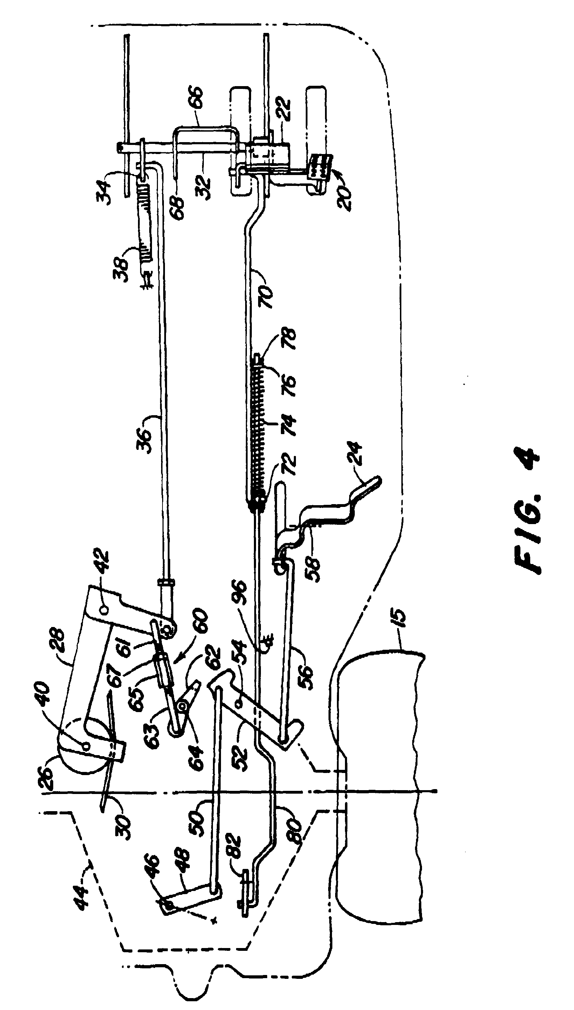

Zum Einstellen der Fahrzeuggeschwindigkeit oder zum Beschleunigen dient eine aus den Fig. 4, 5 und 6 erkennbare Zugmittelscheibe 26 in Form einer Spannrolle über ein Zugmittel 30 des ansonsten nicht weiter dargestellten Zugmittelgetriebes. Die Zugmittelscheibe 26 ist hierzu über einen Arm 28 schwenkbar gelagert, so daß bei einem Verschwenken des Armes das Zugmittel 30, das als Riemen dargestellt ist, mehr oder weniger gespannt wird, wodurch die wirksamen Durchmesser einer nicht gezeigten doppelten Zugmittelscheibe verändert werden. Die Schwenkbewegung der Zugmittelscheibe 26 wird durch das Heruntertreten des Pedals 20 ausgelöst.

Das Pedal 20 ist rechts neben dem Lenkrad 18 auf dem Bedienungsstand 16 vorgesehen und mit einer drehbar gelagerten Welle 32 fest verbunden, an der ein Armteil 34 fest angeordnet ist. An den Armteil 34 ist eine Stange 36 schwenkbar angeschlossen, und der Armteil 34 wird über eine Feder 38, die anderenends an dem Rahmen 12 angreift, mit Bezug auf Fig. 4 nach rückwärts in eine Position gezogen, in der das Pedal 20 seine Ausgangsstellung einnimmt und die Zugmittelscheibe 26 das Zugmittel 30 in einem ungespannten Zustand hält. Die Stange 36 erstreckt sich nach rückwärts und ist schwenkbar an den Arm 28 angeschlossen. Dieser nimmt die Zugmittelscheibe 26 über eine Welle 40 auf und ist seinerseits am Rahmen 12 über eine Welle 42 schwenkbar gelagert.

Das Endgetriebe 44 ist zwischen den rückwärtigen Laufrädern 15 angeordnet und mit einer Schaltwelle 46 versehen, die je nach ihrer Stellung das Endgetriebe in eine Drehrichtung für Vorwärts- oder Rückwärtsfahrt schaltet. Zum Verstellen der Schaltwelle 46 ist an diese ein Richtungsarm 48 drehfest angeschlossen, der an seinem anderen Ende das eine Ende einer ersten Schaltstange 50 schwenkbar aufnimmt, deren anderes Ende an einem Schwenkarm 52 angelenkt ist. Der Schwenkarm 52 ist am Rahmen 12 über eine Welle 54 gelagert, und sein anderes Ende greift an einer zweiten Schaltstange 56 an, die ihrerseits an den von Hand betätigbaren Schalthebel 24 angeschlossen ist. Der Schalthebel 24 ist am Rahmen 12 über einen Bolzen 58 verstellbar angeordnet.

An den Arm 28 ist noch eine Verbindungsstange 60 schwenkbar angeschlossen, die einen vorderen und einen rückwärtigen Stangenteil 61 und 63 aufweist, deren Enden mit gegen-läufigen Gewinden versehen sind. Die Stangenteile 61 und 63 sind miteinander über einen Gewinde aufweisenden Stellteil 65 verbindbar, so daß durch entsprechendes Drehen des Stellteils 65 die wirksame Länge der Verbindungsstange 60 geändert werden kann, um Fertigungstoleranzen und Verschleiß am Zugmittel 30 ausgleichen zu können. Eine Gegenmutter 67 ist noch auf den frontseitigen Stangenteil 61 aufgeschraubt und liegt gegen den Stellteil 65 an, um eine Verstellung während des Einsatzes aufgrund von Erschütterungen zu verhindern. Die Verbindungsstange 60 ist nach rückwärts gerichtet und mit ihrem rückwärtigen Ende an eine Sperrklinke 62 angeschlossen, die an dem Rahmen 12 über einen Bolzen 64 schwenkbar angeschlossen ist.

Das Pedal 22 für die Fahrzeugbremsung ist ebenfalls rechts neben dem Lenkrad 18, aber links neben dem Pedal 20 für die Fahrzeugbeschleunigung vorgesehen. Das Pedal 22 erstreckt sich bodenwärts und bildet dort einen u-förmigen Teil 66, der drehbar auf der Welle 32 lagert. Ein Hocken 68 ist an das eine Ende des u-förmigen Teils 66 angeformt. Eine vordere Bremsstange 70 mit einem rückwärtigen, nach oben gerichteten Teil 72 ist schwenkbar an das Pedal 22 angeschlossen, und zwar oberhalb der Welle 32, und über eine Feder 74, Scheibe 76 und Stift 78 mit einer rückwärtigen Bremsstange 80 verbunden. Die Bremsstange 80 wieder-um ist an einen Bremsarm 82 angeschlossen, dessen Stellung die Bremsung des Fahrzeuges kontrolliert. Ein Parkbremshebel 84 erstreckt sich vom Rahmen 12 nach außen durch einen umgekehrt j-förmig ausgebildeten Schlitz 86, wie es aus Fig. 1 zu ersehen ist. Der Parkbremshebel 84 ist schwenkbar am Rahmen 12 (Fig. 2 und 3) angeordnet und steht unter der Wirkung einer Feder 88, die anderenends am Rahmen 12 angreift und den Parkbremshebel 84 nach unten ziehen will.

Eine in den Fig. 7, 8 und 10 erkennbare Stoppstange 90 ist hinter der Welle 32 jedoch auf einem höheren Niveau, in dem Rahmen 12 gelagert. Sie ist mit einem Teil 92 versehen, der gegenüber der Drehachse der Stoppstange 90 abgesetzt ist und auf dem Nocken 68 reitet. Eine anderenends an den Rahmen 12 angeschlossene Feder 94 ist bestrebt, die Stoppstange 90 im Uhrzeigerdrehsinn zu verschwenken, insbesondere wenn das Pedal 22 heruntergetreten wird.

Im nachfolgenden wird auf die Wirkungsweise der vorliegenden Erfindung bzw. des vorstehend beschriebenen Ausführungsbeispiels eingegangen. Bei nicht betätigtem Pedal 20 ist das Zugmittel 30 ungespannt, und das Fahrzeug kann nicht angetrieben werden. Ein Antrieb kann erst erfolgen, wenn das Pedal 20 bei eingeschaltetem Motor betätigt wird. Um beispielsweise vorwärts fahren zu können, tritt die Bedienungsperson bei sich in seiner Stellung für Vorwärtsfahrt befindlichem Schalthebel 24 das Pedal 20 mit ihrem Fuß herunter. Das Pedal 20 schwenkt dabei nach vorne und dreht die Welle 32 im Uhrzeigerdrehsinn und gleichzeitig den Armteil 34, wobei die Feder 38 gespannt wird. Durch die Bewegung des Armteils 34 wird die Stange 36 nach vorne gezogen und der Arm 26 entgegen dem Uhrzeigerdrehsinn verschwenkt. Im gleichen Drehsinn verschwenkt dabei die mit dem Arm 28 verbundene Zugmittelscheibe 26, wodurch das Zugmittel 30 gespannt wird und die doppelseitige Zugmittelscheibe antreiben kann. Diese wiederum treibt das Endgetriebe 44 an. Wenn die Zugmittelscheibe 26 mit Bezug auf die Fig. 4 entgegen dem Uhrzeigerdrehsinn verschwenkt, wird die Verbindungsstange 60 nach vorne gezogen und die Sperrklinke 62 im Uhrzeigerdrehsinn aus ihrer Position in Fig. 4 verschwenkt. Die Sperrklinke 62 wird immer eine Position einnehmen, die der verschwenkten Stellung des Pedals 20 entspricht, und in diesen Stellungen die Bewegungen des Schwenkarms 52 derart blockieren, daß der Schalthebel 24 nicht aus seiner Stellung für Vorwärtsfahrt in seine Stellung für Rückwärtsfahrt oder umgekehrt verstellt werden kann, d. h. sobald das Pedal 20 aus seiner Ausgangsstellung verschwenkt wurde und in dieser Stellung verbleibt, ist ein Fahrtrichtungswechsel nicht möglich.

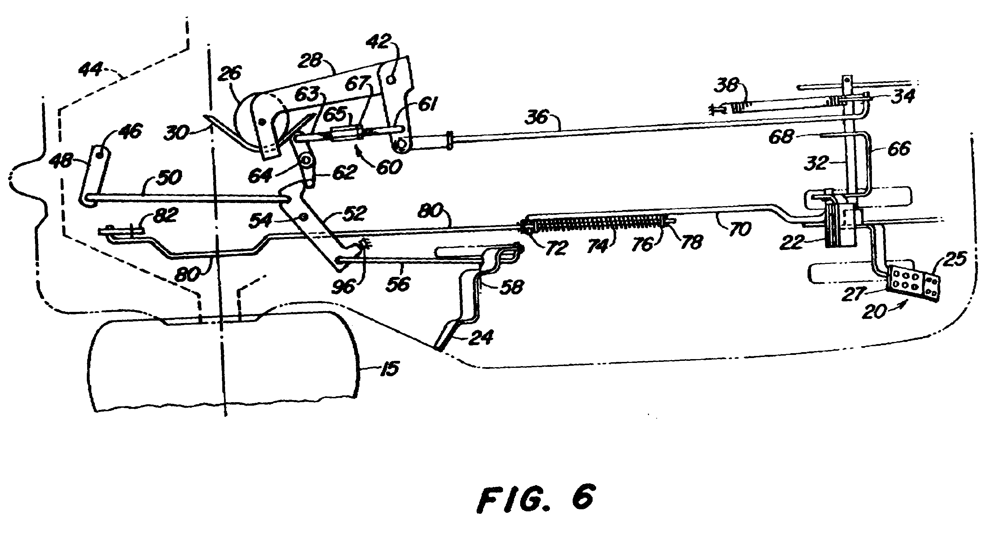

Erst wenn die Bedienungsperson das Pedal 20 freigibt und dieses in seine Ausgangsstellung unter der Wirkung der Feder 38 zurückkehren kann, kann der Schalthebel 24 aus seiner Stellung für Vorwärtsfahrt in seine Stellung für Rückwärtsfahrt oder umgekehrt verstellt werden. Um beispielsweise den Schalthebel 24 in seine Stellung für Rückwärtsfahrt zu verbringen, muß die Bedienungsperson den Schalthebel 24 nach rückwärts verstellen, wie es in Fig. 6 gezeigt ist. Bei diesem Vorgang wird die zweite Schaltstange 56 nach vorne und die erste Schaltstange 50 nach rückwärts verstellt. Der Schwenkarm 52 dreht dabei entgegen dem Uhrzeigerdrehsinn aus seiner Position in Fig. 4 in seine Stellung in Fig. 6 und verdreht gleichfalls den Richtungsarm 48 bzw. die Schaltwelle 46 im Uhrzeigerdrehsinn in seine bzw. ihre Schaltstellung für Rückwärtsfahrt. Danach muß die Bedienungsperson das Pedal 20 heruntertreten, um rückwärts fahren zu können. Sobald der Schwenkvorgang des Pedals 20 nach vorne im Uhrzeigerdrehsinn erfolgt, verschwenkt die Stange 36 den Arm 28 und damit auch die Zugmittelscheibe 26 entgegen dem Uhrzeigerdrehsinn. Bei einem weiteren Heruntertreten wird die Rückwärtsfahrgeschwindigkeit vergrößert. Die Verbindungsstange 60 wird wieder nach vorne gezogen und die Sperrklinke 62 im Uhrzeigerdrehsinn verschwenkt. Allerdings ist für die Rückwärtsfahrt der Schwenkbereich der Sperrklinke im Uhrzeigerdrehsinn durch die Stellung des Schwenkarms 52 begrenzt und damit auch der Bewegungsbereich des Armes 28. Durch diese Begrenzung der Bewegungsbereiche kann rückwärts nicht so schnell wie vorwärts gefahren werden. Bei dem bevorzugten Ausführungsbeispiel kann rückwärts nur halb so schnell wie vorwärts gefahren werden. In seiner Stellung für Rückwärtsfahrt kommt darüber hinaus der Schwenkarm 52 noch gegen einen am Rahmen 12 vorgesehenen Anschlag 96 zur Anlage, der verhindert, daß der Schwenkarm 52 weiter entgegen dem Uhrzeigerdrehsinn verschwenkt werden kann, sollte die Bedienungsperson auch mit einer noch so großen Kraft auf das Pedal 20 treten. Solange das Pedal 20 sich nicht in seiner Ausgangsstellung befindet, also verschwenkt ist, kann der Schalthebel 24 nicht aus seiner Stellung für Rückwärtsfahrt in seine Stellung für Vorwärtsfahrt verstellt werden. Eine einen Schaltvorgang auslösende Bewegung des Schalthebels 24 ist durch die Lage des Sperrhebels 62 blockiert.

Sobald die Bedienungsperson ihren Fuß von dem Pedal 20 zurücknimmt, um die Fahrgeschwindigkeit zu verringern oder um das Fahrzeug anzuhalten, wird die Stange 36 durch die Kraft der Feder 38 nach rückwärts verstellt und damit der Arm 28 im Uhrzeigerdrehsinn, wodurch das Zugmittel 30 letztlich in einen ungespannten Zustand und das Endgetriebe zum Stillstand gerät. Sobald der Arm 28 im Uhrzeigerdrehsinn verschwenkt, wird die Verbindungsstange 60 nach rückwärts verstellt und die Sperrklinke 62 entgegen dem Uhrzeigerdrehsinn. In der in Fig. 4 dargestellten Endstellung ist die Sperrklinke 62 nicht mehr in der Lage, die Schwenkbewegung des Schwenkarms 52 zu behindern. Aus Vorstehendem folgt, daß der Schalthebel 24 nur einen Schaltvorgang zwischen vorwärts und rückwärts auslösen kann, wenn sich das Pedal 20 in seiner Ausgangs- oder Ruhestellung befindet.

In Fig. 4 ist das Pedal 20 in seiner Ausgangs- oder Ruhestellung und der Schalthebel 24 in seiner Stellung für Vorwärtsfahrt dargestellt. In dieser Stellung des Pedals 20 befindet sich der Arm 28 und damit auch die Zugmittelscheibe in der äußersten im Uhrzeigerdrehsinn verschenkten Endstellung, in der die Zugmittelscheibe 26 das Zugmittel 30 nicht mehr zu spannen vermag. Die Laufräder 15 werden nicht angetrieben. Die Sperrklinke 62 nimmt ihre äußerste entgegen dem Uhrzeigerdrehsinn verschwenkte Stellung ein, in der der Schwenkarm zwischen seinen Stellungen für Vorwärts-oder Rückwärtsfahrt verstellt werden kann. Nur in dieser Stellung der Sperrklinke 62 ist eine Schaltung möglich.

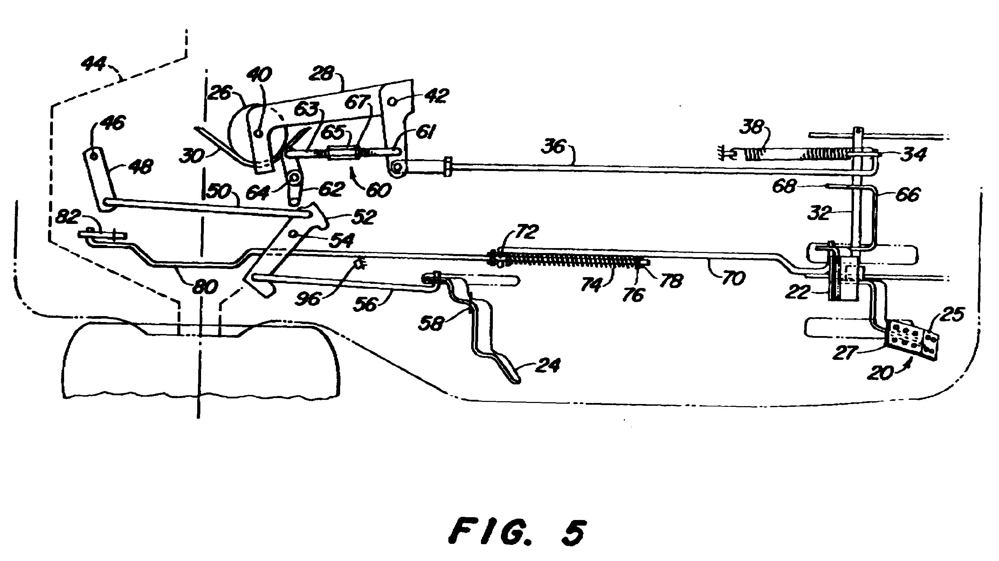

Fig. 5 zeigt den Schalthebel 24 in seiner Stellung für Vorwärtsfahrt und die Zugmittelscheibe 26 in einer entgegen dem Uhrzeigerdrehsinn verschwenkten und das Zugmittel 30 spannenden Position. Antriebsleistung wird dann von dem Motor über das Zugmittelgetriebe und das Endgetriebe auf die Laufräder 15 übertragen. Das Fahrzeug fährt vorwärts, und die Verbindungsstange 60 befindet sich in einer nach vorne gezogenen und die Sperrklinke 62 in einer im Uhrzeigerdrehsinn verschwenkten Position. Auch in dieser Stellung verhindert die Sperrklinke 62 ein Schalten des Fahrzeuges in eine Stellung für Rückwärtsfahrt.

Fig. 6 zeigt den Schalthebel 24 in seiner Position für Rückwärtsfahrt, die Zugmittelscheibe 26 in einer entgegen dem Uhrzeigerdrehsinn verschwenkten, das Zugmittel 30 spannenden extremen Endposition und das Pedal 20 in einem heruntergetretenen Zustand. Der Schwenkarm 52 liegt mit seinem einen Ende gegen den Anschlag 96 an und hat über die Schaltstange 50 den Richtungsarm 48 mit der Schaltwelle 46 im Uhrzeigerdrehsinn in die Getriebestellung für Rückwärtsfahrt verstellt. Die Sperrklinke 62 liegt gegen das andere Ende des Schwenkarmes 52 an und wird durch den Schwenkarm 52 an einer weiteren Drehbewegung im Uhrzeigerdrehsinn gehindert. Damit kann auch der Arm 28 mit der Zugmittelscheibe 26 nicht noch weiter aus seiner Stellung in Fig. 6 entgegen dem Uhrzeigerdrehsinn verschwenken, was eine weitere Geschwindigkeitserhöhung zur Folge hätte. Die Fahrgeschwindigkeit ist damit bei Rückwärtsfahrt begrenzt.

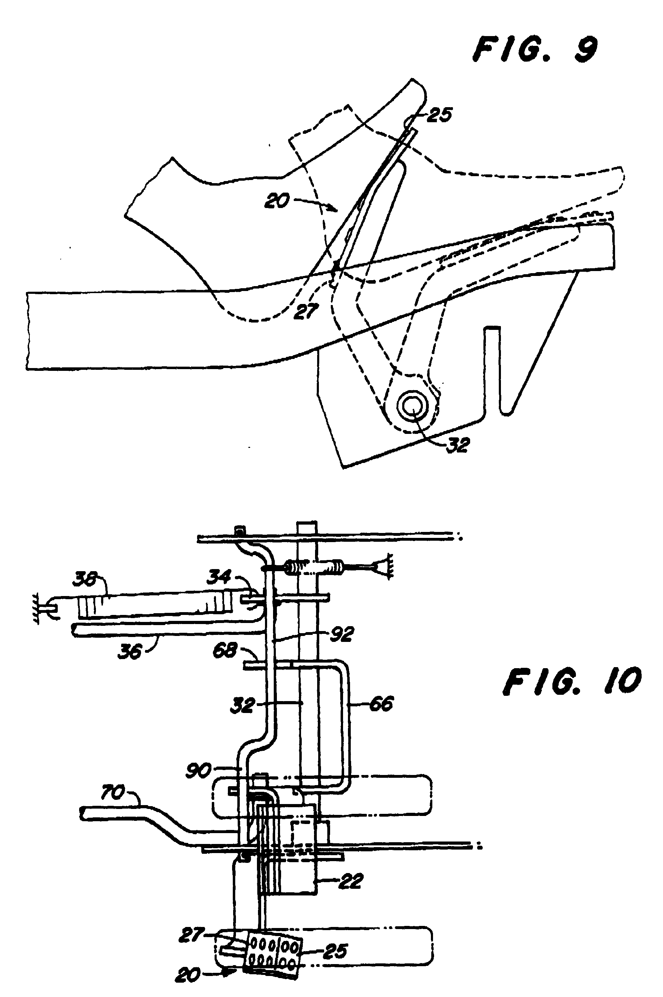

In den Fig. 7 und 8 ist das Pedal 20 für die Fahrzeugbeschleunigung in Seitenansicht dargestellt. Das Pedal hat eine winklige Form mit Pedalflächen 25 und 27. Wenn die Bedienungsperson das Fahrzeug fortbewegen will, beginnt sie zunächst damit, das Pedal 20 herunterzutreten. Hierbei hat der Zehenbereich oder der Fußballen Kontakt mit der oberen Pedalfläche 25. Wenn das Pedal 20 weiter heruntergetreten wird, wird es auf einem Kreisbogen bewegt, wobei der mittlere oder untere Fußbereich mit der unteren Pedalfläche 27 in Kontakt kommt. Da die untere Pedalfläche 27 mit der oberen Pedalfläche 25 einen Winkel bildet, wird das Fußgelenk der Bedienungsperson den Fuß in einem Bogen beim Heruntertreten des Pedals drehen, der kleiner ist als bei einer flachen Pedalfläche. Der Winkel in der Pedalfläche erlaubt daher, daß der Fuß der Bedienungsperson einen bequemeren Winkel mit Bezug auf den Unterschenkel während des gesamten Schwenkbereichs des Pedals 20 einnimmt, ohne daß die Bedienungsperson ihre Ferse von dem Boden des Bedienungsstandes abheben müßte.

Wenn das Fahrzeug vollständig zum Stillstand gekommen ist, kann auf Wunsch die Parkbremse eingelegt werden. Hierzu muß die Bedienungsperson das Pedal 22 für die Fahrzeugbremsung ganz heruntertreten, wodurch die Bremsstange 70 aus ihrer Position in Fig. 2 in ihre Stellung nach Fig. 3 nach vorne verstellt wird. Danach kann der Parkbremshebel 84 aus dem oberen Teil des umgekehrt j-förmig ausgebildeten Schlitzes 86 in dessen unteren Teil bewegt werden. In dieser Stellung (Fig. 3) greift der Parkbremshebel 84 hinter den hochstehenden Teil 72 der Bremsstange 70, wodurch das Pedal 22 in seiner heruntergetretenen Stellung und die Bremsstangen 70 und 80 in ihren nach vorne gezogenen Stellungen gehalten werden. Ohne Rückführung des Parkbremshebels 84 in seine Ausgangsstellung kann dann die Fahrzeugbremse nicht mehr gelöst werden.

Aus den Fig. 7 und 8 ist ferner noch ersichtlich, daß, wenn das Pedal 22 vollständig heruntergetreten ist, der an dem u-förmigen Teil 66 vorgesehene Nocken 68 ebenfalls im Uhrzeigerdrehsinn mitverschwenkt wurde. Dadurch konnte die Stoppstange 90 unter der Wirkung der Feder 94 sich ebenfalls im Uhrzeigerdrehsinn drehen und sich mit ihrem abgesetzten Teil 92 um den Armteil 34 legen. Der Armteil 34 und damit auch das Pedal 20 können dann nicht mehr aus ihrer Ausgangs- oder Ruhestellung im Uhrzeigerdrehsinn verschwenkt werden. Ein ungewolltes Heruntertreten des Pedals 20 und somit eine Fortbewegung des Fahrzeuges ist daher bei eingelegter Parkbremse ausgeschlossen.

Im Rahmen der Erfindung können auch andere Antriebsmittel als ein Zugmittelgetriebe Verwendung finden, wie beispielsweise hydrostatische Getriebe.

## Patentansprüche

1. Kraftfahrzeug (10), insbesondere Kleinschlepper, mit einem mindestens ein Laufrad (14, 15) antreibenden Endgetriebe (44), dessen Drehrichtung bei einer Verstellung eines ersten an Steuerteile angeschlossenen Bedienungselements (Schalthebel 24) in eine Stellung für Vorwärtsfahrt und eine Stellung für Rückwärtsfahrt bzw. umgekehrt umkehrbar und dessen Ausgangsdrehzahl bei einer Verstellung eines zweiten an Beschleunigungsteile angeschlossenen Bedienungselements (Pedal 20) von Null auf eine vorgegebene Maximaldrehzahl über eine verschwenkbare Zugmittelscheibe (26) eines vorgeschalteten Zugmittelgetriebes variierbar ist, wobei, wenn sich das erste Bedienungselement (Schalthebel 24) oder seine Steuerteile in einer Stellung für Vorwärtsfahrt oder Rückwärtsfahrt befinden, das zweite Bedienungselement (Pedal 20) aus seiner Ruhestellung, in der das Endgetriebe (44) nicht angetrieben ist, in einer ersten Richtung verstellbar ist, in der das Endgetriebe (44) antreibbar ist, und in einer zweiten Richtung, die der ersten Richtung entgegengesetzt ist, um das Endgetriebe (44), das sich in seiner Stellung für Vorwärtsfahrt oder Rückwärtsfahrt befindet, aus seiner angetriebenen Stellung in seine nicht angetriebene Stellung zu bringen,
dadurch gekennzeichnet, daß die Steuerteile mit den Beschleunigungsteilen derart gekuppelt sind, daß die Steuerteile aus einer ihrer Stellungen für Vorwärtsfahrt oder Rückwärtsfahrt nur verstellbar sind, wenn sich die Beschleunigungsteile in ihrer Stellung für die Ausgangs- drehzahl Null befinden.

2. Kraftfahrzeug nach Anspruch 1, dadurch gekennzeichnet, daß die Beschleunigungsteile mit den Steuerteilen derart gekuppelt sind, daß bei sich in ihrer Stellung für Rückwärtsfahrt befindlichen Steuerteilen der Verstellbereich der Beschleunigungsteile geringer ist als bei sich in ihrer Stellung für Vorwärtsfahrt befindlichen Steuerteilen.

3. Kraftfahrzeug nach Anspruch 1 oder 2, dadurch gekennzeichnet, daß die Beschleunigungsteile aus ihrer Stellung für die Ausgangsdrehzahl Null gegen die Wirkung mindestens einer Feder (38) verstellbar sind.

4. Kraftfahrzeug nach einem oder mehreren der vorherigen Ansprüche, dadurch gekennzeichnet, daß die Beschleunigungsteile in ihrer Stellung für die Ausgangsdrehzahl Null und bei einer eingelegten Parkbremse gegen eine Verstellung blockiert sind.

5. Kraftfahrzeug nach einem oder mehreren der vorherigen Ansprüche, dadurch gekennzeichnet, daß die Beschleunigungsteile bei Betätigung eines ersten Pedals (20) aus ihrer Stellung für die Ausgangsdrehzahl Null verstellbar sind.

6. Kraftfahrzeug nach Anspruch 5, dadurch gekennzeichnet, daß das erste Pedal (20) zwei in einem Winkel miteinander verbundene Pedalflächen (25, 27) aufweist.

7. Kraftfahrzeug nach einem oder mehreren der vorherigen Ansprüche, dadurch gekennzeichnet, daß die Steuerteile eine erste das Endgetriebe (44) in eine Stellung für Vorwärtsfahrt und in eine Stellung für Rückwärtsfahrt schaltende Schaltstange (50) aufweisen, die anderenends an dem einen Ende eines schwenkbar gelagerten Schwenkarms (52) angelenkt ist, dessen anderes Ende an einer zweiten Schaltstange (56) schwenkbar angreift, die mit ihrem anderen Ende an einem manuell betätigbaren Schalthebel (24) angreift.

8. Kraftfahrzeug nach einem oder mehreren der vorherigen Ansprüche, dadurch gekennzeichnet, daß der Schwenkarm (52) bei sich in ihren Stellungen für Vorwärts- oder Rückwärtsfahrt befindlichen Steuerteilen und aus ihrer Stellung für die Ausgangsdrehzahl Null verstellten Beschleunigungsteilen gegen das eine Ende einer schwenkbar gelagerten Sperrklinke (62) anliegt, die über die Beschleunigungsteile verschwenkbar ist.

9. Kraftfahrzeug nach einem oder mehreren der vorherigen Ansprüche, dadurch gekennzeichnet, daß der Schwenkarm (52) bei sich in ihrer Stellung für Rückwärtsfahrt befindlichen Steuerteilen den Verstellbereich der Beschleunigungsteile aus ihrer Stellung für die Ausgangsdrehzahl Null begrenzt.

10. Kraftfahrzeug nach Anspruch 9, dadurch gekennzeichnet, daß der Schwenkarm (52) bei sich in ihrer Stellung für Rückwärtsfahrt befindlichen Steuerteilen gegen einen Anschlag (96) anliegt.

11. Kraftfahrzeug nach einem oder mehreren der vorherigen Ansprüche, dadurch gekennzeichnet, daß die Sperrklinke (62) mit ihrem dem Schwenkarm (52) abgelegenen Ende mit einem die Zugmittelscheibe (26) verschwenkenden Arm (28) verbunden ist, wobei die Zugmittelscheibe (26) in der Stellung der Beschleunigungsteile für die Ausgangsdrehzahl Null ein das Endgetriebe (44) normalerweise antreibendes Zugmittel (30) ungespannt läßt.

12. Kraftfahrzeug nach einem oder mehreren der vorherigen Ansprüche, dadurch gekennzeichnet, daß das erste Pedal (20) mit einer drehbar gelagerten Welle (32) fest verbunden ist, die einen Armteil (34) aufweist, und daß eine Bremsvorrichtung mit einem zweiten Pedal (22) vorgesehen ist, das bei eingelegter Parkbremse in seiner Bremsstellung gehalten wird und bei Betätigung einen mit ihm verbundenen Nocken (68) verschwenkt, der gegen eine Stoppstange (90) derart anliegt, daß sie sich bei sich in ihrer Stellung für die Ausgangsdrehzahl Null befindlichen Beschleunigungsteilen und bei sich in der Bremsstellung befindlichem zweiten Pedal (22) unter der Wirkung einer Feder (94) um den Armteil (34) legt.

## Claims

1. A motor vehicle (10), especially a small tractor, with a final gear (44) driving at least one running wheel (14, 15) and whose direction of rotation can be switched by adjustment of a first operator element (gear lever 24) connected to control parts, into a position for forward travel and a position for reverse travel or conversely and whose output speed of rotation can be varied by adjustment of a second operator element (pedal 20) connected to acceleration parts, from zero up to a predetermined maximum speed of rotation, by means of a tiltable pulley (26) of a preceding belt-type gear, wherein, when the first operator element (gear lever 24) or its control parts are in a position for forward travel or reverse travel, the second operator element (pedal 20) can be adjusted from its rest position, in which the final gear (44) is not driven, in a first direction in which the final gear (44) can be driven and in a second direction opposite to the first direction, in order to bring the final gear (44), which is in its position for forward travel or reverse travel, out of its driven position into its un-driven position, characterized in that the control parts are so coupled to the acceleration parts that the control parts can only be adjusted out of one of their positions for forward travel or reverse travel when the acceleration parts are in their position for the zero output speed of rotation.

2. A motor vehicle according to claim 1, characterized in that the acceleration parts are so coupled to the control parts that, when the control parts are in their position for reverse travel, the range of adjustment of the acceleration parts is smaller than when the control parts are in their position for forward travel.

3. A motor vehicle according to claim 1 or 2, characterized in that the acceleration parts are adjustable out of their position for the zero output speed of rotation against the action of at least one spring (38).

4. A motor vehicle according to one or more of the preceding claims, characterized in that the acceleration parts are blocked from adjustment in their position for the zero output speed of rotation with a parking brake applied.

5. A motor vehicle according to one or more of the preceding claims, characterized in that the acceleration parts are adjustable on operation of a first pedal (20) out of their position for the zero output speed of rotation.

6. A motor vehicle according to claim 5, characterized in that the first pedal (20) has two pedal surfaces (25, 27) joining at an angle to one another.

7. A motor vehicle according to one or more of the preceding claims, characterized in that the control parts comprise a first shift rod (50) switching the final gear (44) into a position for forward travel and into a position for reverse travel, which rod is pivoted at the other end to the one end of a pivotally mounted swinging arm (52), whose other end is in pivotal engagement with a second shift rod (56), which engages at its other end with a manually actuated shift lever (24).

8. A motor vehicle according to one or more of the preceding claims, characterized in that the swinging arm (52) bears against the one end of a pivotally mounted latch (62) with the control parts in their position for forward travel or reverse travel and with the acceleration parts out of their position for the zero output speed or rotation, the latch being adapted to be pivoted by the acceleration parts.

9. A motor vehicle according to one or more of the preceding claims, characterized in that the swinging arm (52) limits the range of adjustment of the acceleration parts out of their position for the zero output speed of rotation with the control parts in their position for reverse travel,

10. A motor vehicle according to claim 9, characterized in that the swinging arm (52) bears against a stop (96) in the position of the control parts for reverse travel.

11. A motor vehicle according to one or more of the preceding claims, characterized in that the latch (62) is connected at its end remote from the swinging arm (52) to an arm (28) which tilts the pulley (26), whereby the pulley (26) leaves a belt means (30) normally driving the final gear (44) slack in the position of the acceleration parts for the zero output speed of rotation.

12. A motor vehicle according to one or more of the preceding claims, characterized in that the first pedal (20) is fixed to a rotatably mounted shaft (32) which has an arm part (34), and in that there is provided a brake device with a second pedal (22) which is held in its braking position with parking brake applied and which swings a cam (68) connected thereto on actuation, the cam so bearing against a stop rod (90) that it lies around the arm part (34) under the action of a spring (94) in the position of the acceleration parts for the zero output speed of rotation and in the braking position of the second pedal (22).

## Revendications

1. Véhicule à moteur (10), notamment petit tracteur, avec une transmission finale (44) qui entraîne au moins une roue (14, 15) et dont le sens de rotation peut, en déplaçant un premier élément de manoeuvre (levier de commutation 24) raccordé à des organes de commande, être inversé d'une position pour la marche avant dans une position pour la marche arrière, ou vice-versa, et dont le régime de sortie peut, en deplaçant un second élément de manoeuvre (pédale 20) raccordé à des organes d'accélération, être varié du régime nul à un régime maximal prédéterminé par l'intermédiaire d'une poulie de moyen de traction pivotante (26) d'une transmission à moyen de traction montée en amont, le second élément de manoeuvre (pédale 20) pouvant, lorsque le premier élément de manoeuvre (levier de commutation 24) ou ses organes de commande se trouvent dans une position pour la marche avant ou la marche arrière, être déplacé de sa position de repos, dans laquelle la transmission finale (44) n'est pas entraînée, dans une première direction, dans laquelle la transmission finale (44) peut être entraînée, et dans une seconde direction, opposée à la première direction, pour amener la transmission finale (44), qui se trouve dans sa position pour la marche avant ou la marche arrière, de sa position entraînée dans sa position non entraînée,
**caractérisé** en ce que les organes de commande sont accouplés aux organes d'accélération de telle sorte que les organes de commande ne peuvent être déplacés d'une de leurs positions pour la marche avant ou la marche arrière que si les organes d'accélération se trouvent dans leur position pour le régime de sortie nul.

2. Véhicule à moteur selon la revendication 1, **caractérisé** en ce que les organes d'accélération sont accouplés aux organes de commande de telle sorte que la plage de déplacement des organes d'accélération est plus restreinte quand les organes de commande, se trouvent dans leur position pour la marche arrière que quand les organes de commande se trouvent dans leur position pour la marche avant.

3. Véhicule à moteur selon la revendication 1 ou 2, **caractérisé** en ce que les organes d'accélération peuvent être déplacés de leur position pour le régime de sortie nul contre l'action d'au moins un ressort (38).

4. Véhicule à moteur selon l'une quelconque des revendications précédentes, **caractérisé** en ce que les organes d'accélération sont bloqués et empêchés d'être déplacés dans leur position pour le régime de sortie nul lorsqu'un frein de stationnement est appliqué.

5. Véhicule à moteur selon l'une quelconque des revendications précédentes, **caractérisé** en ce que les organes d'accélération peuvent être déplacés de leur position pour le régime de sortie nul en actionnant une première pédale (20).

6. Véhicule à moteur selon la revendication 5, **caractérisé** en ce que la première pédale (20) présentent deux faces de pédale (25, 27) raccordées l'une à l'autre en formant un angle.

7. Véhicule à moteur selon l'une quelconque des revendications précédentes, **caractérisé** en ce que les organes de commande présentent une première tringle de commutation (50), commutant la transmission finale (44) dans une position pour la marche avant et dans une position pour la marche arrière et articulée à son autre extrémité à une première extrémité d'un bras pivotant (52), monté à pivotement et dont l'autre extrémité agit à pivotement sur une seconde tringle de commutation (56), qui agit par son autre extrémité sur un levier de commutation (24) à actionnement manuel.

8. Véhicule à moteur selon l'une quelconque des revendications précédentes, **caractérisé** en ce que, lorsque les organes de commande se trouvent dans leurs positions pour la marche avant ou arrière et que les organes d'accélération sont déplacés de leur position pour le régime de sortie nul, le bras pivotant (52) s'applique contre une extrémité d'un cliquet d'arrêt (62) monté à pivotement, qui peut être pivoté au moyen des organes d'accélération.

9. Véhicule à moteur selon l'une quelconque des revendications précédentes, **caractérisé** en ce que, lorsque les organes de commande se trouvent dans leur position pour la marche arrière, le bras pivotant (52) limite la plage de déplacement des organes d'accélération depuis leur position pour le régime de sortie nul.

10. Véhicule a moteur selon la revendication 9, **caractérisé** en ce que le bras pivotant (52) s'applique contre une butée (96) lorsque les organes de commande se trouvent dans leur position pour la marche arrière.

11. Véhicule à moteur selon l'une quelconque des revendications précédentes, **caractérisé** en ce que le cliquet d'arrêt (62) est, par son extrémité éloignée du bras pivotant (52), relié à un bras (28) faisant pivoter la poulie de moyen de traction (26), la poulie de moyen de traction (26), dans la position des organes d'accélération pour le régime de sortie nul, laissant relâché un moyen de traction (30) qui entraîne normalement la transmission finale (44).

12. Véhicule à moteur selon l'une quelconque des revendications précédentes, **caractérisé** en ce que la première pédale (20) est fixement reliée à un bras (32), monté à rotation et présentant une partie de bras (34), et en ce qu'il est prévu un dispositif de freinage avec une seconde pédale (22), qui est maintenue dans sa position de freinage lorsque le frein de stationnement est appliqué et qui, lorsqu'elle est actionnée, fait pivoter un ergot (68) qui lui est relié, qui s'applique contre une tige d'immobilisation (90) de telle sorte que cette tige s'applique autour de la partie de bras (34), sous l'action d'un ressort (94), lorsque les organes d'accélération se trouvent dans leur position pour le régime de sortie nul et que la seconde pédale (22) se trouve en position de freinage.
